# EUROPEAN PATENT SPECIFICATION

(11) **EP 1 707 818 B1**
(45) Date of publication and mention of the grant of the patent: **11.09.2013**
(21) Application number: 06005114.1
(22) Date of filing: 13.03.2006
(51) Int. Cl.: F04C 29/02, F04C 18/356, F04C 23/00, F04C 28/08

(54) **Hermetically sealed rotary piston compressor with oil injection**
Hermetischer Drehkolbenverdichter mit Öleinspritzung
Compresseur hermétique à piston rotatif avec injection d'huile

(30) Priority: 17.03.2005 JP 2005076664; 31.03.2005 JP 2005101232; 31.03.2005 JP 2005101233
(43) Date of publication of application: 04.10.2006
(73) Proprietor: Sanyo Electric Co., Ltd., Moriguchi-shi Osaka 570-8677 (JP)
(72) Inventor: Ogasawara, Hirotsugu, Ota-shi Gunma 373-0852 (JP); Nishikawa, Takahiro, Ora-gun Gunma 370-0518 (JP); Hara, Masayuki, Ota-shi Gunma 370-0342 (JP); Yoshida, Hiroyuki, Ota-shi Gunma 370-0332 (JP); Kogure, Yoshihisa, Ora-gun Gunma 370-0615 (JP); Hashimoto, Akira, Ota-shi Gunma 373-0829 (JP)
(74) Representative: Glawe, Delfs, Moll

(56) References cited:
- EP-A- 0 903 499
- PATENT ABSTRACTS OF JAPAN vol. 1996, no. 09, 30 September 1996 (1996-09-30) -& JP 08 114189 A (MATSUSHITA ELECTRIC IND CO LTD), 7 May 1996 (1996-05-07)
- PATENT ABSTRACTS OF JAPAN vol. 007, no. 203 (M-241), 8 September 1983 (1983-09-08) -& JP 58 101291 A (SANYO DENKI KK; others: 01), 16 June 1983 (1983-06-16)
- PATENT ABSTRACTS OF JAPAN vol. 1996, no. 03, 29 March 1996 (1996-03-29) -& JP 07 293470 A (MATSUSHITA REFRIG CO LTD), 7 November 1995 (1995-11-07)

## Description

### BACKGROUND OF THE INVENTION

### 1. Field of the Invention

The present invention relates to a hermetically sealed compressor used for refrigeration and air-conditioning as described in the preamble of claim 1. Such a compressor is known e.g. from any of JP-A-08114189 or JP-A-58101291 or JP-A-07293470. The present invention relates particularly to a technique of enhancing COP (Coefficient Of Performance: refrigeration power/input power) of a hermetically sealed compressor.

### 2. Description of the Related Art

There is known a hermetically sealed rotary compressor including an electrically-drivenelement and a rotary compression element driven by the electrically-driven element to compress refrigerant that are accommodated in a hermetically sealed container. This type of hermetically sealed rotary compressor is disclosed in JP-A-6-323276, for example. According to this hermetically sealed rotary compressor, an eccentrically rotating roller is disposed in a cylinder so as to keep predetermined clearance from the inner surface of the cylinder and form a crescent-shaped space (so-called compression chamber) in the cylinder. Furthermore, a vane is provided so as to come into sliding contact with the roller, and the crescent-shaped space is partitioned to a refrigerant-sucking low-pressure chamber side and a refrigerant-compressing high pressure chamber side by the vane in terms of pressure.

However, the conventional hermetically sealed rotary compressor has a problem that the sealing performance of the crescent-shaped space is not sufficient, resulting in reduction of the cooling efficiency of the hermetically sealed rotary compressor.

### SUMMARY OF THE INVENTION

The present invention has been implemented in view of the foregoing situation, and has an object to provide a hermetically sealed compressor in which the sealing performance between a roller and a cylinder is enhanced and thus the cooling efficiency can be enhanced.

A hermetically sealed compressor according to the invention is defined in claim 1.

### BRIEF DESCRIPTION OF THE DRAWINGS

Fig. 1 is a longitudinally-sectional view showing the construction of a hermeticallysealed rotary compressor according to an embodiment of the present invention;
Fig. 2 is an enlarged longitudinally-sectional view showing a rotary compressing element;
Fig. 3 is a plan view showing a cylinder;
Fig. 4 is an enlarged longitudinally-sectional view showing
   an oil injecting portion and an opening/closing valve;

### DETAILED DESCRIPTION OF THE PREFERRED EMBODIMENT

Preferred embodiments according to the present invention will be described hereunder with reference to the accompanying drawings.

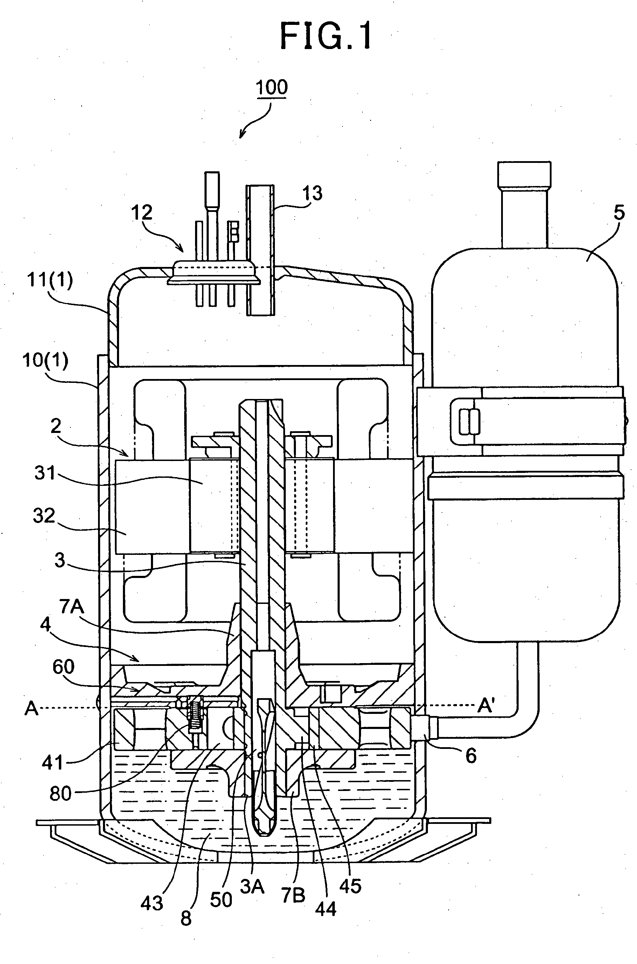

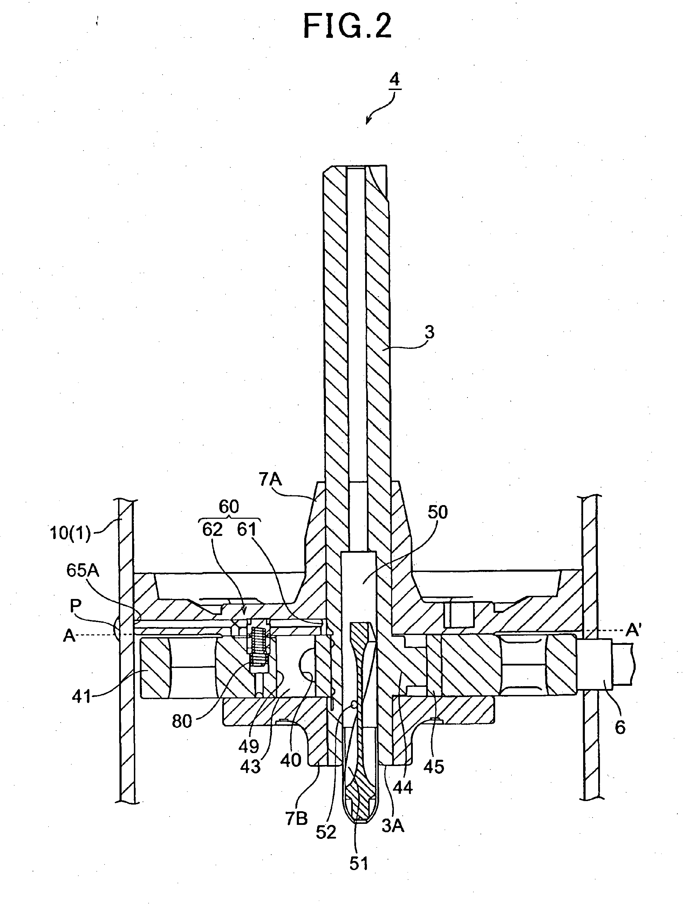

Fig. 1 is a longitudinally-sectional view showing a hermetically sealed rotary compressor according to an embodiment of the present invention, and Fig. 2 is an enlarged longitudinally-sectional view of a rotary compressing element. The hermetically sealed rotary compressor 100 constructs a refrigerating unit by connecting a condenser for refrigerant and an evaporator for refrigerant through a pipe. As shown in Fig. 1, the hermetically sealed rotary compressor 100 has a hermetically sealed container 1, an electrically-driven element 2 accommodated at the upper side of the hermetically sealed container 1, and a rotary compressing element 4 accommodated at the lower side of the hermetically sealed container 1. The rotary compressing element 4 is driven by a crank shaft 3 of the electrically-driven element 2 to compress refrigerant.

The hermetically sealed container 1 is equipped with a cylindrical shell portion 10, and an end cap 11 fixed to the shell portion 10 by arc welding or the like, and the end cap 11 is provided with a terminal 12 serving as a relay terminal when power is supplied to the electrically-driven element 2, and a discharge pipe 13 for discharging compressed refrigerant to the outside of the compressor 100. Furthermore, a suction pipe 6 for leading refrigerant from an accumulator 5 to the rotary compressing element 4 is fixed to the neighborhood of the bottom portion of the shell portion 10 by welding, for example.

The electrically-driven element 2 comprises a DC motor such as a so-called DC brushless motor or the like, and it is equipped with a rotor 31 and a stator 32 fixed to the shell portion 10. The crank shaft 3 is fixed to the rotor 31, and the crank shaft 3 is freely rotatably mounted to a primary bearing 7A and, an secondary bearing 7B equipped to the rotary compressing element 4 so that the rotating force of the rotor 31 is transmitted to the rotary compressing element 4.

The rotary compressing element 4 has one cylindrical cylinder 41, and it is pinched between the primary bearing 7A (support member) and the secondary bearing 7B and integrally fixed to the primary bearing 7A and the secondary bearing 7B by bolts or the like.

The primary 7A is fixed to the inner surface of the hermetically sealed container 1, and the cylinder 41 is supported in the hermetically sealed container 1 by the primary bearing 7A. The opening at the upper side of the cylinder 41 is closed by the primary bearing 7A, and also the opening at the lower side of the cylinder 41 is closed by the secondary bearing 7B, thereby forming a compression chamber 43 in the cylinder 41.

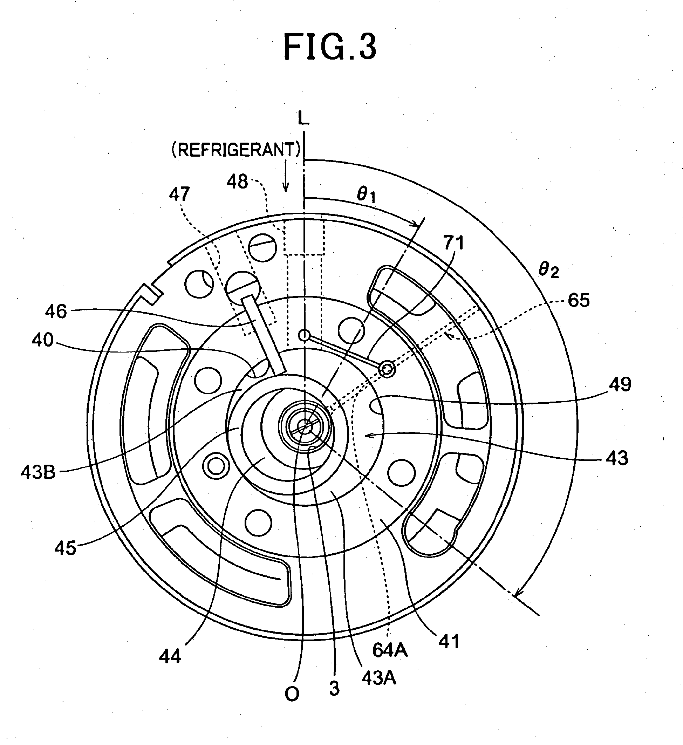

A roller 45 which is fitted in an eccentric portion integrally formed with the crank shaft 3 and eccentrically rotated is provided in the compression chamber 43. Furthermore, as shown in Fig. 3, a refrigerant suction port 48 and a refrigerant discharge port 40 are formed in the cylinder 41. A vane groove 47 extending in the radial direction of the cylinder 41 is provided between the suction port 48 and the discharge port 40, and a vane 46 is freely slidably provided in the vane groove 47. The vane 46 is pressed against the roller 45 by an urging member such as a spring or the like at all times. When the roller 45 is eccentrically rotated, the vane 46 reciprocates in the vane groove 47 in sliding contact wit the outer peripheral surface of the roller 45, and it serves to partition the inside of the compression chamber 4 3 into a low-pressure chamber side 43A and a high-pressure chamber side 43B in terms of pressure.

More specifically, the cylindrical space in the cylinder 41, that is, the compression chamber 43 for refrigerant is constructed in a crescent-shape because the roller 45A is eccentrically disposed in the cylinder 41. The contact of the vane 46 with the peripheral surface of the roller 45A partitions the crescent-shaped compression chamber 43 into the low-pressure chamber side 43A at the refrigerant suction port 48 side and the high-pressure chamber side 43B at the refrigerant discharge port 40 side.

As shown in Fig. 1, the suction pipe 6 is engagedly inserted in the suction port 48 of the cylinder 41, and the discharge port 40 shown in Fig. 3 is provided with a discharge valve. When the refrigerant pressure of the high-pressure chamber side 43B reaches a discharge pressure regulated by the discharge valve, the refrigerant is discharged from the discharge port 40 into the hermetically sealed container 1.

That is, in the hermetically sealed rotary compressor 100, the electrically-driven element 2 rotates the crank shaft 3, so that the roller 45 is eccentrically rotated in the compression chamber 43. Accordingly, the refrigerant supplied from the outside of the compressor through the accumulator 5 is sucked through the suction pipe 6 into the lower pressure chamber side 43A of the compression chamber 43. The refrigerant thus sucked is compressed while fed to the high-pressure chamber side 43B, discharged from the discharge port 40 into the hermetically sealed container 1 and then discharged from the discharge pipe 13 to the outside of the compressor.

As shown in Figs. 1 and 2, oil 8 is stocked at the bottom portion of the hermetically sealed container 1 until the lower surface of the primary bearing 7A (indicated by a line A-A' in Figs. 1 and 2. The lower end portion 3A of the crank shaft 3 is provided with an oil pickup 50 serving as an oil supply device for supplying the oil 8 to the primary bearing 7A, the secondary bearing 7B, the rubbing portion between the rotary compressing element 4 and the crank shaft 3 and the sliding portion of the rotary compressing element 4.

Specifically describing, the crank shaft 3 is designed in a cylindrical shape, and a cylindrical oil pickup 50 is pressed in the lower end portion 3A of the crank shaft 3. As shown in Fig. 3, a paddle 51 constituting a spiral oil flow path is integrally formed in the oil pickup 50 as shown in Fig. 2. When the crank shaft 3 is rotated, the oil 8 stocked in the hermetically sealed container 1 is sucked up from the lower end 50A of the oil pickup 50 by centrifugal force in connection with the rotation of the paddle 51, passed through an oil supply hole 52 formed at the upper end side of the oil pickup 50 and then supplied as lubricating oil to the primarybearing 7A, the secondarybearing 7B and each rubbingportionbetween the rotary compressing element 4 and the crank shaft 3.

In order to prevent the abrasion between the roller 45 and the cylinder 41 when the roller 45 is eccentrically rotated, the roller 45 is designed so that predetermined clearance is kept between the roller 45 and the inner surface 49 of the cylinder 41 at the contact place therebetween. However, this clearance degrades the sealing performance of the compression chamber 43, particularly the sealing performance between the low-pressure chamber side 43A and the high-pressure chamber side 43B, and the cooling efficiency would be reduced unless any countermeasure is taken.

Therefore, the hermetically sealed rotary compressor 100 of this embodiment is equipped with an oil injecting portion 60 for injecting the oil 8 stocked in the hermetically sealed container 1 into the compression chamber 43 when the refrigerant is sucked into the compression chamber 43. By injecting the oil 8 into the compressing chamber 43, oil film is formed between the roller 45 and the cylinder 41 to thereby enhance the sealing performance.

As shown in Fig. 2, the oil injecting portion 60 comprises an oil stocking portion 61 for stocking the oil 8 and an oil path 62 for leading the oil 8 stocked in the oil stocking portion 61 to the compression chamber 43 of each of the cylinder 41.

Theoil stocking portion 61 is formed by providing an annular space along the outer peripheral surface of the crank shaft 3 at the rubbing face of the primary bearing 7A against the crank shaft 3. Accordingly, when the oil pickup 50 supplies the oil 8 to each rubbing portion between the rotary compressing element 4 and the crank shaft 3, a part of the oil 8 is stocked in the oil stocking portion 61.

The oil path 62 is designed so as to extend from the oil stocking portion 61 and intercommunicate with the compressing chambers 43 of the respective cylinder 41. During the suction process of the refrigerant, the oil 8 in the oil stocking portion is led to the compressing chambers 43.

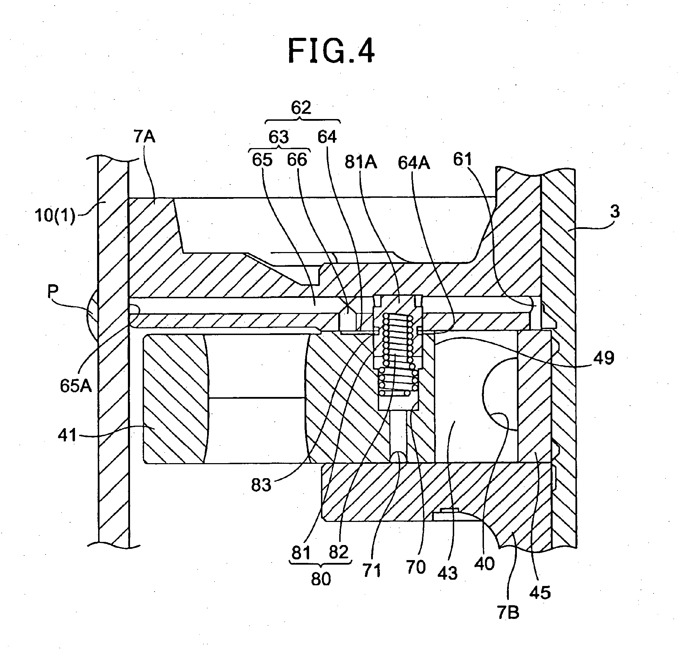

More specifically, the oil path 62 comprises an secondary oil path 63 formed in the primary bearing 7A as shown in Fig. 4, and a primary oil path 64 formed in the cylinder 41 so as to intercommunicate with the secondary oil path 63.

The secondary oil path 63 comprises a first oil path 65 penetrating from the outer peripheral surface of the primary bearing 7A to the oil stocking portion 61, and a second oil path 66 penetrating through the primary bearing 7A in the vertical direction (thickness direction) and intercommunicating with the first oil path 65. Accordingly, the oil 8 stocked in the oil stocking portion 61 is led to the primary oil path 64 of the cylinder 41 through the first oil path 65 and the second oil path 66.

When the primary bearing 7A is fixed to the hermetically sealed container 1 by carrying out tack-welding from the outside of the hermetically sealed container 1, the place P corresponding to the opening end 65A of the first oil path 65 at the outer peripheral surface side of the primary bearing 7A is tack-welded from the outside of the hermetically sealed container 1, whereby the opening end 65A can be closed in close contact with the inner surface of the hermetically sealed container 1 simultaneously with the fixing of the primary bearing 7A. Accordingly, the opening end 65A can be closed without separately using any member for closing the opening end 65A, so that the cost can be reduced and the fabrication working process can be simplified. When not the primary bearing 7A, but the cylinder 41 is fixed to the hermetically sealed container 1, the opening end 65A of the first oil path 65 may be closed by using plug or the like.

The primary oil path 64 is provided on the upper surface of the cylinder 41, and it is formed as a narrow groove so that one end thereof intercommunicates with the opening end of the second oil path 66 and the other end thereof extends so as to intercommunicate with the compression chamber 43. Accordingly, the oil 8 led from the secondary oil path 63 is led through the primaryoilpath 64 into the compression chamber 43. Furthermore, in connection with the suction of the refrigerant into the low-pressure chamber side 43A of the compression chamber 43, one end 64A of the primary oil path 64 is opened to the inner surface 49 of the cylinder of the low-pressure chamber side 43A as shown in Fig. 3 so that the oil 8 stocked in the oil stocking portion 61 is injected in the compression chamber 43.

That is, the refrigerant discharge pressure (for example, 3MPa) is applied to the oil 8 in the hermetically sealed container 1. Accordingly, by opening one end 64A of the primary oil path 64 to the low-pressure chamber side 43a, the high-pressure oil 8 stocked in the oil stocking portion 61 is passed through the oil path 62 comprising the secondary oil path 63 and the primary oil path 64 by the differential pressure between the pressure of the oil 8 and the inner pressure (for example, 1.1MPa) of the low-pressure chamber side 43A of the compression chamber 43 and led into the low-pressure chamber side 43A of the compression chamber 43 during the refrigerant suction process.

As a result, following the suction of the refrigerant into the compression chamber 43, the oil 8 is injected into the compression chamber 43. Therefore,sufficientoilfilmisformed between the cylinder inner surface 49 and the roller 45 by the oil 8 can be enhanced. Particularly, the oil is injected into the compression chamber 43 during the suction process of the refrigerant into the compression chamber 43, and the low-pressure chamber side 43A and the high-pressure chamber side 43B of the compression chamber 43 can be more surely separated from each other. Therefore, in the process that the refrigerant is fed to the high-pressure chamber side 43B and compressed (compression process), leakage of the compressed refrigerant into the low-pressure chamber side 43A can be prevented, and the refrigerant compression efficiency is enhanced, so that the cooling efficiency of the hermetically sealed rotary compressor 100 can be enhanced.

When one end 64A of the primary oil path 64 is formed to be opened at an angle in a predetermined angle range from θ1 to θ2 (θ1: 0°, θ2: 170°, more preferably θ1: 125°, θ2: 165°) with respect to a reference line L connecting the suction port 48 and the center point O of the cylinder 41A as shown in Fig. 3, the compression efficiency of the refrigerant (about 55° in the example of Fig. 3) can be further enhanced.

Here, the amount of the oil 8 injected into the compression chamber 43 can be adjusted by adjusting the cross-section area (opening area) D of the primary oil path opened to the inner surface 49 of the cylinder. According to this embodiment, in order to set the amount of the oil 8 injected into the compression chamber 43 to a proper amount, the cross-section area D of the primary oil path 64 is determined so that the ration R (=D/V) of the cross-section area D of the primary oil path 64 and the displacement volume V of the compression chamber 43 falls within a predetermined range.

More specifically, if the ration R is excessively small, the primary oil path 64 is excessively narrow and the oil 8 is not injected into the compression chamber 43. On the other hand, if the ratio R is excessively large, the oil 8 is excessively injected into the compression chamber 43 and thus liquid compression occurs. Therefore, according to this embodiment, the ratio R is set to fall in the range from 0.004 to 0.03 (mm²/cc), and the cross-sectional area D of the primary oil path 64 is determined on the basis of the ratio R, whereby the sealing performance between the inner surface 49 of the cylinder and the roller 45A is enhanced with preventing the liquid compression due to excessive injection of the oil 8.

The effect of enhancing the sealing performance by the oil injection into the compression chamber 43 is larger when the rotary compressing element 4 is rotated in a low frequency area (forexample, 15Hz to 30Hz) and thus the differential pressure between the discharge pressure and the suction pressure is smaller than when the rotary compressing element 4 is rotated in a high frequency area and thus rotated at a high speed. That is, by limiting the oil injection into the compression chamber 43 to the time when the differential pressure is small, the cooling efficiency can be more effectively enhanced with suppressing wasting of the oil 8. Therefore, according to this embodiment, the oil path 62 is provided with an opening/closing valve 80, and the opening/closing valve 80 is set to an open state only when the rotary compression element 4 is rotated at a low speed and thus the differential pressure between the discharge pressure and the suction pressure is smaller, thereby injecting the oil 8 into the compression chamber 43.

The construction of the opening/closing valve 80 will be described. As shown in Fig. 4, a cylindrical through hole 70 which traverses from the first oil path 65 to the primary oil path 64 and extends to the lower surface of the cylinder 41 is provided in the cylinder 41, and the opening/closing valve 80 is provided in the through hole 80. The opening/closing valve 80 comprises a substantially cylindrical valve plug which is engagedly inserted in the through hole 70, and a spring 82 as an urging member for urging the valve plug 81 to the first oil path 65. The upper portion 81A of the valve plug 81 invades into the first oil path 65, and the pressure in the first oil path 65, that is, the discharge pressure is applied to the upper portion 81A. At this time, the upper portion 81A of the valve plug 81 is designed to be smaller in diameter than the through hole 70, so that the flow of the oil 8 can be secured even when the upper portion 81A is located in the first oil path 65.

The narrow groove 83 is formed along the peripheral direction on the outer periphery of the valve plug 81, and when the valve plug 81 is set and kept to be pressed up to the first oil path 65 side by the spring 82, the primary oil path 64 which is disconnected by the upper portion 81A of the valve plug 81 in the through hole 70 is connected through the narrow groove 83 of the valve plug 81, and the oil injection into the compression chamber 43 is carried out.

Furthermore, as shown in Fig. 3, an intercommunicating rod 71 extending from the suction port 48 to the through hole 70 is formed on the lower surface of the cylinder 41, and the suction pressure of the refrigerant is led to the bottom portion of the through hole 70 through the intercommunicating rod 71. That is, the pressure in the first oil path 65 (that is, the discharge pressure of the rotary compressing element 4) is applied to the upper portion 81A of the valve plug 81, and the refrigerant suction pressure is applied to the inside of the valve plug 81.

Accordingly, during the period when the discharge pressure of the rotarycompressing element 4 is low and thus the differential pressure of the discharge pressure from the suction pressure is small, the valve plug 81 is urged up to be located at the first oil path 65 by the urging force of the spring 82, and the primary oil path 64 is kept to be connected through the narrow groove 83 of the valve plug 81 to the one end portion 64A opened to the compression chamber 43, that is, the open state for oil injection is set. Furthermore, when the discharge pressure of the rotary compressing element 4 is increased and the differential pressure from the suction pressure is increased, the valve plug 81 is pressed down against the urging force of the spring 82, and the state that the narrow groove 83 of the valve plug 81 and the primary oil path 65 is disconnected from each other, that is, the close state is set. Under this close state, the oil path 62 is closed, and the injection of the oil 8 into the compression chamber 43 is stopped.

Accordingly, the oil injection into the compression chamber 43 is limited to the case where the rotary compressing element 4 is driven at a low frequency and thus the differential pressure between the discharge pressure and the suction pressure is small, and the cooling efficiency can be effectively enhanced with suppressing consumption of the oil 8 stocked in the heretically sealed container 1.

As described above, according to this embodiment, the oil 8 is injected into the compression chamber 43 when the refrigerant is sucked into the compression chamber 43. Therefore, sufficient oil film is formed between the cylinder 41 and the roller 45 by the oil 8 injected in the compression chamber 43, and thus the sealing performance can be enhanced. Accordingly, the refrigerant during the compression process can be prevented from leaking into the low-pressure chamber side 43A, and thus the compression efficiency is enhanced, so that the cooling efficiency of the hermetically sealed rotary compressor 100 can be enhanced.

Furthermore, according to this embodiment, the ratio between the cross-section area D of the primary oil path 64 constituting the oil path 62 and the displacement volume V of the compression chamber 43 is set to be within a predetermined range. Accordingly, the sealing performance between the cylinder inner surface 49 and the roller 45 can be enhanced with preventing the liquid compression due to excessive injection of the oil 8.

Still furthermore, according to this embodiment, the oil path 62 is provided with the opening/closing valve 80 which is set to the open state only when the discharge pressure of the rotary compressing element 4 is low, that is, in an area where the differential pressure between the discharge pressure and suction pressure of the rotary compressing element 4 is small. Therefore, the oil injection into the compression chamber 43 is limited to the time period when where the differential pressure between the discharge pressure and suction pressure of the rotary compressing element 4, whereby the cooling efficiency can be effectively enhanced with suppressing the consumption of the oil 8 stocked in the hermetically sealed container 1.

The above embodiment relates to the hermetically sealed rotary compressor 1 having one cylinder 41, however, the present invention my be applied to a hermetically sealed rotary compressor having two or more compressors.

## Claims

1. A hermetically sealed compressor comprising:
an electrically-driven element (2);
a rotary compressing element (4) driven by the electrically-driven element to compress refrigerant; the rotary compressing element having at least an eccentrically rotating roller (45) disposed in a cylinder (41) so as to keep predetermined clearance from the inner surface of the cylinder and form a compression chamber (43) in the cylinder and a vane (46) provided so as to come into sliding contact with the roller, and the compression chamber being partitioned to a refrigerant-sucking low-pressure chamber side and a refrigerant-compressing high pressure chamber side by the vane in terms of pressure;
a hermetically sealed container (1) in which the electrically-driven element and the rotary compressing element are accommodated and oil is stocked;
an oil path (62) that is configured to extend from an oil stocking portion (61) and intercommunicate with the compression chamber (43) of the cylinder (41) and injects the oil into the compression chamber when the refrigerant is sucked into the compression chamber of the cylinder constituting the rotary compressing element;
and
an opening/closing valve (80) that comprises a valve plug (81) and a spring, **characterized in that** said valve plug (81) and said spring are (82) for urging the valve plug in the open sate of the valve, wherein a refrigerant discharge pressure is applied to one side of the valve plug and the refrigerant suction pressure is applied to the other side of the valve plug such that the valve is opened/closed by the differential pressure between the refrigerant suction pressure and the refrigerant discharge pressure against the force of the spring
the oil path (62) is provided with a primary oil path (64) that is formed on the upper surface of the cylinder (41), supplied with the oil in the oil stocking portion (61) and configured to intercommunicate with an inner surface of a low pressure chamber (43A) of the compression chamber (43), a narrow groove (83) is formed on the peripheral wall of the valve plug (81) of the opening/closing valve (80) and configured to intercommunicate with the primary oil path (64) so that the oil in the oil stocking portion (61) is supplied to the inner surface of the low pressure chamber (43A) of the compression chamber (43) through the intercommunication between the primary oil path (64) and the narrow groove (83), and the primary oil path (64) and the narrow groove (83) intercommunicate with each other in accordance with the differential pressure between the refrigerant suction pressure and the refrigerant discharge pressure against the force of the spring.

## Patentansprüche

1. Hermetisch versiegelter Kompressor mit:
einem elektrisch angetriebenen Element (2);
einem Drehverdichtungselement (4), das vom elektrisch angetriebenen Element angetrieben wird, um Kältemittel zu verdichten; wobei das Drehverdichtungselement zumindest eine exzentrisch drehende Laufrolle (45), die in einem Zylinder (41) angeordnet ist, um einen vorbestimmten Abstand von der inneren Oberfläche des Zylinders beizubehalten und einen Kompressionsraum (43) im Zylinder zu bilden, und einen Schieber (46) aufweist, der angeordnet ist, um mit der Laufrolle in Schleifkontakt zu kommen, und die Kompressionskammer durch den Schieber hinsichtlich des Drucks in eine kältemittelansaugende Niederdruck-Kammerseite und eine kältemittelverdichtende Hochdruck-Kammerseite unterteilt wird;
einem hermetisch versiegelten Behälter (1), in dem das elektrisch angetriebene Element und das Drehverdichtungselement aufgenommen sind und Öl vorgehalten ist;
einem Ölpfad (62), der gestaltet ist, sich von einem Ölvorhalteteil (61) zu erstrecken und mit der Verdichtungskammer (43) des Zylinders (41) in gegenseitiger Verbindung zu stehen, und das Öl in die Verdichtungskammer einspritzt, wenn das Kältemittel in die Verdichtungskammer des Zylinders, der das Drehverdichtungselement bildet, gesaugt wird; und
einem Öffnungs-/Verschlussventil (80), das einen Ventilkegel (81) und eine Feder (82) umfasst,
**dadurch gekennzeichnet, dass** der Ventilkegel (81) und die Feder (82) für das Drängen des Ventilkegels in den Öffnungszustand des Ventils sind, wobei ein Kältemittelablassdruck an eine Seite des Ventilkegels angelegt wird und der Kältemittelansaugdruck an die andere Seite des Ventilkegels angelegt wird, so dass das Ventil durch den Differenzdruck zwischen dem Kältemittelansaugdruck und dem Kältemittelablassdruck gegen die Kraft der Feder geöffnet/geschlossen wird
der Ölpfad (62) mit einem Hauptölpfad (64) versehen ist, der auf der oberen Oberfläche des Zylinders (41) gebildet ist, mit dem Öl im Ölvorhalteteil (61) gespeist wird und der gestaltet ist, mit einer inneren Oberfläche einer Niederdruckkammer (43A) der Verdichtungskammer (43) in gegenseitiger Verbindung zu stehen, eine schmale Rille (83) auf der äußeren Wand des Ventilkegels (81) des Öffnungs-/Verschlussventils (80) gebildet ist und gestaltet ist, mit dem Hauptölpfad (64) in gegenseitiger Verbindung zu stehen, so dass das Öl im Ölvorhalteteil (61) durch die gegenseitige Verbindung zwischen dem Hauptölpfad (64) und der schmalen Rille (83) zur inneren Oberfläche der Niederdruckkammer (43A) der Verdichtungskammer (43) geleitet wird, und der Hauptölpfad (64) und die schmale Rille (83) gemäß dem Differenzdruck zwischen dem Kältemittelansaugdruck und dem Kältemittelablassdruck gegen die Kraft der Feder, miteinander in gegenseitiger Verbindung stehen.

## Revendications

1. Compresseur fermé hermétiquement, qui comprend :
un élément commandé électriquement (2) ;
un élément de compression rotatif (4) entraîné par ledit élément commandé électriquement afin de comprimer un réfrigérant ; ledit élément de compression rotatif ayant au moins un galet tournant excentrique (45) disposé dans un cylindre (41) de façon à maintenir un espace prédéterminé par rapport à la surface intérieure dudit cylindre et à former une chambre de compression (43) dans ledit cylindre, et une aube (46) prévue de façon à entrer en contact coulissant avec ledit galet, ladite chambre de compression étant partitionnée en un côté de chambre à basse pression qui aspire le réfrigérant et un côté de chambre à haute pression qui comprime le réfrigérant à l'aide de la pression de ladite aube ;
un conteneur hermétiquement fermé (1) dans lequel ledit élément commandé électriquement et ledit élément de compression rotatif sont placés, et de l'huile est stockée ;
un trajet d'huile (62) qui est configuré pour s'étendre depuis une partie de stockage d'huile (61) et pour communiquer avec ladite chambre de compression (43) dudit cylindre (41), et qui injecte ladite huile dans ladite chambre de compression lorsque ledit réfrigérant est aspiré dans ladite chambre de compression dudit cylindre constituant ledit élément de compression rotatif ;
et
une vanne d'ouverture/de fermeture (80) qui comprend un clapet de vanne (81) et un ressort, **caractérisé en ce que** ledit clapet de vanne (81) et ledit ressort (82) sont destinés à forcer ledit clapet de vanne dans l'état d'ouverture de ladite vanne, dans lequel une pression d'évacuation de réfrigérant est appliquée à un côté dudit clapet de vanne et ladite pression d'aspiration de réfrigérant est appliquée à l'autre côté dudit clapet de vanne de sorte que ladite vanne soit ouverte/fermée par la différence de pression entre ladite pression d'aspiration du réfrigérant et ladite pression d'évacuation du réfrigérant, contre la force dudit ressort,
ledit trajet d'huile (62) étant muni d'un trajet d'huile principal , contre la force dudit ressort,
ledit trajet d'huile (62) étant muni d'un trajet d'huile principal (64) qui est formé sur la surface supérieure dudit cylindre (41), et qui est alimenté avec l'huile contenue dans ladite partie de stockage d'huile (61) et configuré pour communiquer avec une surface intérieure d'une chambre à basse pression (43A) de ladite chambre de compression (43), une rainure étroite (83) étant formée sur la paroi périphérique dudit clapet de vanne (81) de ladite vanne d'ouverture/de fermeture (80) et configurée pour communiquer avec ledit trajet d'huile principal (64) de sorte que ladite huile contenue dans ladite partie de stockage d'huile (61) soit fournie à ladite surface intérieure de ladite chambre à basse pression (43A) de ladite chambre de compression (43) par le biais de la communication entre ledit trajet d'huile principal (64) et ladite rainure étroite (83), et ledit trajet d'huile principal (64) et ladite rainure étroite (83) communiquant ensemble selon ladite différence de pression entre ladite pression d'aspiration du réfrigérant et ladite pression d'évacuation du réfrigérant, contre la force dudit ressort.
